(19) **Europäisches Patentamt**
**European Patent Office**
**Office européen des brevets**

(11) **EP 3 350 466 B1**

(12) **EUROPEAN PATENT SPECIFICATION**

(45) Date of publication and mention
of the grant of the patent:
**14.07.2021 Bulletin 2021/28**

(51) Int Cl.:
*F16D 65/08* (2006.01)  *F16D 65/092* (2006.01)
*G01L 5/28* (2006.01)  *G01L 1/16* (2006.01)

(21) Application number: **16770243.0**

(22) Date of filing: **15.09.2016**

(86) International application number:
**PCT/EP2016/071865**

(87) International publication number:
**WO 2017/046265 (23.03.2017 Gazette 2017/12)**

(54) **BRAKING DEVICE FOR A HEAVY VEHICLE AND A METHOD FOR PREVENTING OVERHEATING OF THE BRAKES OF A HEAVY VEHICLE**

BREMSVORRICHTUNG FÜR SCHWERLASTFAHRZEUG UND VERFAHREN ZUR VERHINDERUNG DER ÜBERHITZUNG DER BREMSEN EINES SCHWERLASTFAHRZEUGS

DISPOSITIF DE FREINAGE POUR UN VÉHICULE LOURD ET PROCÉDÉ POUR ÉVITER UNE SURCHAUFFE DES FREINS D'UN VÉHICULE LOURD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2015 IT UB20153706**

(43) Date of publication of application:
**25.07.2018 Bulletin 2018/30**

(73) Proprietor: **ITT Italia S.r.l.**
**20020 Lainate (IT)**

(72) Inventors:
• **SERRA, Stefano**
**12032 Barge (CN) (IT)**

• **DONZELLI, Daniele**
**10062 Luserna San Giovanni (Torino) (IT)**
• **SOLARI, Mattia**
**12032 Barge (CN) (IT)**
• **TERRANOVA, Marco**
**10149 Torino (IT)**

(74) Representative: **Rapisardi, Mariacristina**
**Ufficio Brevetti Rapisardi S.r.l.**
**Via Serbelloni, 12**
**20122 Milano (IT)**

(56) References cited:
WO-A1-99/08018  DE-A1- 10 243 127
US-A1- 2004 015 283  US-A1- 2014 311 833

**Description**

The present invention relates to a braking device for a heavy vehicle and to a method for preventing overheating of the brakes of a traveling heavy vehicle.

A problem that is particularly significant within the context of heavy vehicles, for example articulated vehicles, concerns the so-called phenomenon of "Hot Runners" which represents one of the most dangerous and frequent braking system failure modes that can occur when traveling, especially under conditions that are demanding for the braking system. The phenomenon consists in the malfunction of the brake caliper which locks-up against the disc resulting in an unwanted continuous braking condition that can cause extremely serious damage to the braking system as well as the bursting of a tire due to excessive heating caused by the constant friction between the disc and the brake pad.

From WO2014/170726A1 a vehicle braking system is known which includes a braking element, in particular a sensorized brake pad. The brake pad has the particularity of integrating at least a piezoceramic sensor operating at high temperatures and designed to emit an electrical signal when subjected to mechanical stress. The brake pad thus structured is able to detect in a simple and economical way, without the need for an external energy source, the presence and extent of the mechanical stresses which can arise at the interface between said pad and the brake disc. Such a brake pad ultimately allows for the possibility of checking the braking in order to eliminate phenomena such as vibrations and noise and in order to report abnormal operating conditions.

The braking device described in WO2014/170726A1 is however not suitable for the detection and prevention of the phenomenon of "hot runners"

US2004/015283 A1 discloses a braking device according to preamble of claim 1.

The technical task proposed by the present invention is, therefore, to provide a braking device for a heavy vehicle and a method for preventing overheating of the brakes on a heavy vehicle when traveling that will allow for the elimination of the technical drawbacks of the known art.

Within the context of this technical task an objective of the invention is to provide a simple and reliable system for preventing the "hot runners" phenomenon.

A further objective of the invention is to improve heavy vehicle road safety. The technical task, as well as these and other objectives, according to the present invention are achieved by providing a braking device for a heavy vehicle according to claim 1.

Advantageously, the temperature datum is obtained from a non-rotating part of the brake and, in addition to being extremely representative of the brake operating temperature, does not suffer from other limitations that are typical of measurements taken on rotating bodies such as disc brakes or drum brakes that render measurement complex and costly.

In a preferred embodiment of the invention said comparator is configured for the real-time comparison of the temperatures detected in the brake pads or brake shoes.

In a preferred embodiment of the invention said comparator is configured to validate the emission of said alarm if the temperature detected in at least a brake pad is greater than said first threshold temperature and the temperature detected in a majority of the brake pads is lower than said first threshold temperature.

In a preferred embodiment of the invention said memory contains at least a second threshold temperature that is lower than said first threshold temperature, said control means being configured so as to command emission of a pre-alarm if the temperature detected in at least a brake pad or pad shoe is comprised between said first and said second threshold temperature.

In a preferred embodiment of the invention said emitting means are configured for emitting an acoustic and/or an audible alarm.

In a preferred embodiment of the invention said control means comprise peripheral electronic control units, each located at a respective brake, and a central electronic control unit communicating with said peripheral control units and with said emitting means.

In a preferred embodiment of the invention said control means comprise a central electronic control unit communicating with said at least a sensor and with said emissions means.

In a preferred embodiment of the invention said control means are connected to a CAN-bus (Controller Area Network) of the vehicle.

In a preferred embodiment of the invention the brake pad comprises at least an auxiliary sensor provided between said friction block and said support and communicating with said control means, said at least an auxiliary sensor comprising at least a pressure sensor and/or one shear sensor.

The pressure sensor and the shear sensor are piezoceramic sensors which differ in regard to the direction of the applied bias therein.

In a preferred embodiment of the invention said comparator is configured to validate the emission of said alarm only in a presence of a predetermined correlation between the temperature signal and the signal emitted by said at least an auxiliary sensor in a predetermined measurement time interval.

In a preferred embodiment of the invention each sensor is covered by an electrically-insulating protective layer.

In a preferred embodiment of the invention said control means comprise an electrical energy supplier configured for absorbing energy from a motion of the vehicle.

The present invention also reveals a method for preventing overheating of the brakes on a heavy vehicle, wherein each brake comprises at least a brake pad or a brake shoe exhibiting a support and a friction block acting on a brake disc or brake drum associated to a wheel of the heavy vehicle, at least a temperature sensor provided between said friction block and said support, and at least an auxiliary sensor provided between said friction block and said support, said at least an auxiliary sensor comprising at least a piezoceramic pressure sensor and/or a piezoceramic shear sensor, characterized by the fact of:

- acquiring in real time the temperature detected in the brake pads or brake shoes;
- comparing in real time the temperature detected in the brake pads or brake shoes;
- validating the emission of an alarm if the temperature detected in at least a brake pad or brake shoe is greater than said threshold temperature and the temperature detected in at least another brake pad or brake shoe is lower than said threshold temperature; and
- in case of validation, generating an acoustic and/or visual alarm,

wherein the emission of said alarm is validated only in a presence of a predetermined correlation between the temperature signal and the signal emitted by said at least an auxiliary sensor in a predetermined measurement time interval.

The invention therefore reveals a safety system that is capable of preventing the initial phases of the "hot runners" phenomenon by providing a timely warning to the driver in order to prevent danger associated with said phenomenon. Additional features and benefits of the invention will become more evident from the description of a preferred but not exclusive embodiment of the braking device for a heavy vehicle and of the method for preventing overheating of the brakes on a heavy vehicle according to the invention, illustrated by way of a non-limiting example in the accompanying drawings, in which:

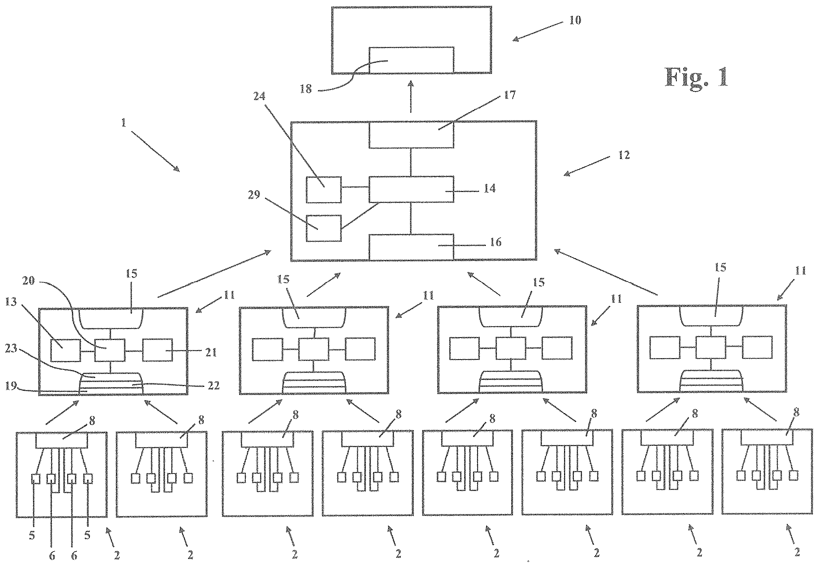

Figure 1 shows a block diagram of the braking device;

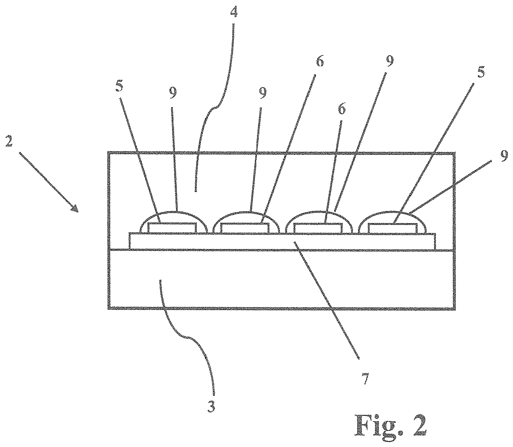

Figure 2 shows a diagram of the brake pad.

With reference to the figures cited above, a braking device for a heavy vehicle is shown, such as an articulated vehicle, indicated as a whole with the reference number 1.

The braking device 1 which will be described below comprises brakes, each brake comprising a caliper furnished with 2 brake pads that can be activated on a disk brake.

The braking device may alternatively include brakes comprising brake shoes instead of brake pads, which can be activated on a drum brake rather than a disk brake.

Each brake pad 2 has a support 3 formed for example from a metallic plate, a block 4 of friction material supported by the support 3 acting upon the associated disk brake of the wheel of the heavy vehicle, and one or more sensors 5, 6 interposed between the support 3 and the friction block 4.

The sensors 5, 6 are mounted onto an electrically- insulated electrical circuit 7 designed to acquire the electrical signals emitted by the sensors 5, 6 to be processed either in real time or at a later time.

The electrical circuit 7 is integrated into the support 3 preferably by means of heat resistant screen printing technology (glass ceramic).

The minimum brake pad 2 configuration envisages only one temperature sensor 5, but preferably at least two temperature sensors 5 are envisaged, for example PT1000 sensors, and one or more auxiliary sensors 6, for example one or two piezoceramic pressure sensors and/or one or two piezoceramic shear sensors.

The sensors 5, 6 and the electrical circuit 7 are covered in a protective electrically-insulating material 9, preferably ceramic.

The brake pad 2 components must be designed for use at temperatures of at least 600 °C and above.

The braking device 1 advantageously comprises a safety device to prevent overheating of the brakes.

The safety device comprises emitting means 10 of an alarm and control means 11, 12 communicating with the sensors 5, 6 and with the emitting means 10.

The control means 11, 12 include a memory 13 containing at least a first threshold temperature, and a comparator 14 configured to validate the alarm if the temperature detected in at least one brake pad 2 exceeds the first threshold temperature and the temperature detected in at least one other brake pad 2 and preferably for most brake pads 2 is below the first threshold temperature.

The comparator 14 is configured for the real-time comparison of the temperatures detected for the brake pads 2 and, depending upon the outcome of the comparison, immediately performs the validation or otherwise of the emission of the alarm.

The control means 11, 12, in the case of validation, immediately activate the emitting means 10 in order to emit the first alarm signal.

The emitting means 10 are configured for emitting an acoustic and/or an audible alarm that can be noticed within the vehicle.

For example, the emitting means 10 may include special LEDs and/or a buzzer on the instrument panel of the vehicle.

Alternatively, or additionally, the emitting means 10 can be represented by the user interfaces of the smartphone of the driver of the vehicle wherein wireless communications hardware or software is installed together with the control means 11, 12 in order to generate the alarm.

With this embodiment the operating malfunction of the braking device is promptly noticed by the driver who can then take the necessary timely precautions in order to eliminate said malfunction before the onset of catastrophic events.

Preferably the memory 13 also contains at least a second threshold temperature below the first threshold temperature.

The control means 11, 12 are also configured to activate the emission of a pre-alarm if the temperature detected in at least a brake pad falls between the first and second threshold temperature.

The control means 11, 12 comprise peripheral electronic units comprises 11 units, each located at a respective brake, and a central electronic control unit 12. The peripheral control units 11 and the sensors 5, 6 of the brakes pads 2 communicate by means of communication interfaces 8, 19.

The interface 8 comprises for example an electrical connector of the electrical circuit 7 which is designed to send electrical signals to the outside of the brake pad 2 for the further processing thereof.

The central control unit 12 and the peripheral control units 11 communicate by means of the communication interfaces 15, 16.

The central control unit 12 and the emitting means 10 communicate by means of communications interfaces 17, 18.

The communications interfaces 8 and 19, 15 and 16, 17 and 18 can be cabled or wireless.

Each peripheral control unit 11 comprises a memory 13, a processor 20 and an electrical energy supplier 21.

Each peripheral control unit 11 further comprises an A/D digitization stage 22 that transforms the analog signals from the sensors 5, 6 into digital signals, and a digital signal conditioning stage 23.

The processor 20 of each peripheral control unit 11 is designed to process the incoming digital signals in order to generate an alarm or pre-alarm to be sent to the central control unit 12.

The central control unit 12 is designed to validate an activation signal in order to convert it into an emitting means activation signal 10.

The central control unit 12 is also designed to automatically convert a pre-alarm activation signal into an emitting means 10 activation signal.

The central control unit 12 can be used to concentrate the information received from peripheral control units 11 and to transmit said information to the CAN - bus of the vehicle for communication with the electronic system on board the vehicle.

The central control unit 12 has a memory 24 for storing the information received from the peripheral control units 11, and an electrical energy supplier 29.

This is of course just one example among the various possible configurations for the control means 11, 12. Another possible configuration requires that there be a single peripheral control unit 11 for handling the sensors 5, 6 of all of the brakes, or else that the central control unit 12 integrates all of the functions including those of the peripheral control units 11.

Ultimately therefore a plurality of peripheral control units 11 each located at a respective wheel of the vehicle can be included, or a single peripheral control unit 11 which, by managing all of the wheels, is located at the shortest distance from said wheels.

Further, the vehicle CAN-bus can also can be connected to the peripheral control units 11 in addition to or instead of the central control unit 12.

In any case the connection to the CAN - bus can be achieved by means of radio links such as Bluetooth, Wi-Fi or other radio protocols and standards based upon RF technology.

The electrical energy suppliers 21, 29 are preferably configured in order to absorb energy from the motion of the vehicle in the form of vibrational, kinetic and thermal energy converted into electricity.

Preferably, the electronics connected to the sensors 5, 6 are also powered by electrical energy converted from the energy absorbed from the motion of the vehicle.

Below we illustrate a method for the detection of "hot runners".

The method is based upon the sensors 5, 6 mounted on the brake pads 2.

With regard to the temperature measured there is a very strong correlation between the temperature distribution over the disc brakes and the brake pad 2 where the temperature sensors 5 are installed.

It is known that the brake disk temperature (and therefore also that of the brake pad) decisively influences the appearance of "hot runners" and the relative increase in this value is a typical side effect of the "hot runners" phenomenon.

In the event of a "hot runner" anomaly the brake disk temperature and therefore the temperature of the brake pad 2 tends to rise in an abnormal manner and very quickly up to limiting values (even above 600 °C).

It follows that the monitoring of the temperature in order to detect a "hot runner" becomes an appropriate choice. However in order to avoid false alarms, it is useful to adopt a more sophisticated strategy for discriminating a "hot runner" from a normal rise in temperature due to prolonged use of the associated braking system for example when traveling through long mountainous sections of road, especially downhill, which involve very high braking system temperatures without there being an actual anomaly within the braking system itself.

To do this also the ancillary pressure sensors 6 or shear sensors are used, in conjunction with an analysis based upon the temporal flow of data, preferably in real time, and correlations between the temperature and pressure data or braking torque data.

Delving into the details, a period of time T is appropriately defined (for example equal to a length of 10 minutes), such that it is long enough for the phenomena identified by the analyzes carried out within this period T not to be confused with those phenomena that are typical of normal braking that normally lasts much less than a minute.

On the other hand this period T must be short enough to allow for the detection of "hot runners" early enough to limit or nullify the damage associated with said "hot runners".

The logic for the activation of the alarms is based upon the definition of two logic service functions H(t) and G(t). These functions are defined as follows within the period T:

> H(t) = -1 if P<Pthreshold
> H (t) =1 elsewhere
> G(t) = -1 if T<Tthreshold1
> G(t)=1 elsewhere

in which:

> P is the brake pressure as measured by the pressure sensors 6 (or by other sensors on board the vehicle). In place of the pressure P the torque $\tau$ can also be used with identical logic and a similar threshold value.
> T is the temperature measured by the temperature sensors 5.

As an indication Pthreshold is typically in the order of 10 bar while Tthreshold1 is typically 500 or 600 °C i.e., a very high temperature level.

Thanks to the calculation of the correlation between the two functions within the period T by means of the following integral I:

$$I = \frac{1}{T}\int_0^T G(t)H(t)dt$$

It is possible to obtain a condition that depends upon the correlation of the two functions G(t) and H(t). In fact, under normal working conditions (without the presence of "hot runners") it is expected that the two functions will be highly correlated, which means in numerical terms that the integral of I = 1 or very close to it. In the presence of a "hot runner" at a wheel the integral of I is consistently less than 1. In fact, in the absence of braking during the period T, I = -1. A condition can therefore be defined for the presence of "hot runners" by setting an appropriate threshold that is low enough for I, to be identified as the threshold for generating an alarm activation signal for the presence of a "hot runner". In a reasonable way a threshold may be set as:

> Ithreshold<0
> Ithreshold<0 true during the period T identifies the presence of a "hot runner".

This would mean having more than 50% of the time along period T without correlation between the temperature and the pressure of the brake pad.

In order to avoid the occurrence of false alarms fuzzy logic may also be applied in order to determine the intermediate degrees of probability of the presence of a "hot runner" event. Furthermore, the logic includes a cross-check between the levels I among the various brake pads. In fact, if all or the majority of the pads are over Ithreshold then the presence of a "hot runner" is more likely.

For which reason the algorithm for the activation of an alarm is as follows:

> 1. If for at least one brake pad 2 T > Tthreshold1 is detected then a pre-alarm activation signal is generated which is automatically converted into a signal that activates the emitting means 10,which emit a pre-alarm
> 2. If for at least one brake pad 2 T > Tthreshold1 and I<0 is detected then an alarm activation signal is generated indicating the presence of a "hot runner"
> 3. If the alarm activation signal is not detected by the majority of the brake pads 2 then the alarm activation signal is validated and converted into a signal activating the emitting means 10, which emit an alarm indicating the presence of a "hot runner"

Alternative logic for the detection of a "hot runner" calls for the use of temperature only. In such a case the correlation is examined between the temperatures of the brake pads 2 during the period T.

In this case the algorithm for the activation of an alarm is as follows:

a second threshold temperature Tthreshold2<Tthreshold1 is established.

> 1. If for at least one brake pad 2 T> Tthreshold2 and <Tthreshold1 is detected then a pre-alarm activation signal is generated which is automatically converted into a signal activating the emitting means 10, which emit a pre-alarm
> 2. If for at least one brake pad 2 T> Tthrehold1 is detected then an alarm activation signal is generated indicating the presence of a "hot runner"
> 3. If the alarm activation signal is not detected by the majority of the brake pads 2 then the alarm activation signal is validated and converted into a signal activating the emitting means 10, which emit an alarm indicating the presence of a "hot runner"

The braking device thus conceived is susceptible to numerous modifications and variations, all falling within the scope of the appended claims.

**Claims**

1. A braking device (1) for a heavy vehicle, comprising brakes each comprising at least a brake pad or brake shoe (2) exhibiting a support (3) and a friction block (4) acting on a brake disc or a brake drum associated to a wheel of the heavy vehicle, and a temperature sensor (5) mounted on an electrically insulated electric circuit (7) integrated on the support (3) and provided between said friction block (4) and said support (3), **characterized in that** it comprises a safety device for preventing overheating of the brakes, said safety device comprising emitting means (10) of an alarm and control means (11, 12) communicating with said at least a sensor (5) and with said emitting means (10), said control means (11, 12) comprising a memory (13) containing at least a first threshold temperature, and a comparator (14) configured to validate the emission of said alarm if a temperature detected in at least a brake pad (2) or brake shoe is greater than said first threshold temperature and the temperature detected in at least another brake pad (2) or brake shoe is lower than said first threshold temperature, said brake pad (2) or brake shoe comprises at least an auxiliary sensor (6) provided between said friction block (4) and said support (3) and communicating with said control means (11, 12), said at least an auxiliary sensor (6) comprising at least a piezoceramic pressure sensor and/or a piezoceramic shear sensor, said comparator (14) is configured to validate the emission of said alarm only in a presence of a predetermined correlation between the temperature signal and the signal emitted by said at least an auxiliary sensor (6) in a predetermined measurement time interval.

2. The braking device (1) for a heavy vehicle according to claim 1, **characterized in that** said comparator (14) is configured for real-time comparison between the temperature detected in the brake pads (2) or brake shoes.

3. The braking device (1) for a heavy vehicle according to claim 1, **characterized in that** said comparator (14) is configured to validate the emission of said alarm if the temperature detected in at least a brake pad (2) or brake shoe is greater than said first threshold temperature and the temperature detected in a majority of the brake pads (2) or brake shoes is lower than said threshold temperature.

4. The braking device (1) for a heavy vehicle according to claim 1, **characterized in that** said memory (13) contains at least a second threshold temperature that is lower than said first threshold temperature, said control means (11, 12) being configured so as to command emission of a pre-alarm if the temperature detected in at least a brake pad (2) or brake shoe is comprised between said first and said second threshold temperature.

5. The braking device (1) for a heavy vehicle according to claim 1, **characterized in that** said emitting means (10) are configured for emitting an acoustic and/or an audible alarm.

6. The braking device (1) for a heavy vehicle according to claim 1, **characterized in that** said control means (11, 12) comprise peripheral electronic control units (11), each located at a relative brake, and a central electronic control unit (12) communicating with said peripheral control units (11) and with said emitting means (10).

7. The braking device (1) for a heavy vehicle according to claim 1, **characterized in that** said control means (11, 12) comprise a central electronic control unit communicating with said at least a sensor (5) and with said emitting means (10).

8. The braking device (1) for a heavy vehicle according to claim 1, **characterized in that** said control means (11, 12) are connected to a CAN-bus (Controller Area Network) of the vehicle.

9. The braking device (1) for a heavy vehicle according to any preceding claim, **characterized in that** each sensor (5, 6) is covered by an electrically-insulating protective layer (9).

10. The braking device (1) for a heavy vehicle according to claim 1, **characterized in that** said control means (11, 12) comprise an electrical energy supplier configured for absorbing energy from a motion of the vehicle.

11. A method for preventing overheating of brakes in a heavy vehicle, wherein each brake comprises at least a brake pad (2) or brake shoe exhibiting a support (3) and a friction block (4) acting on a brake disc or a brake drum associated to a wheel of the heavy vehicle, at least a temperature sensor (5) provided between said friction block (4) and said support (3), and at least an auxiliary sensor (6) provided between said friction block (4) and said support (3), said at least an auxiliary sensor (6) comprising at least a piezoceramic pressure sensor and/or a piezoceramic shear sensor, **characterized by** the fact of:

    - acquiring in real time a temperature detected in the brake pads (2) or brake shoes;
    - comparing in real time the temperature detected in the brake pads (2) or brake shoes;

       - validating the emission of said alarm if the temperature detected in at least a brake pad (2) or brake shoe is greater than said threshold temperature and the temperature detected in at least another brake pad or brake shoe is lower than said threshold temperature; and

- in case of validation, generating an acoustic and/or visual alarm,

wherein the emission of said alarm is validated only in a presence of a predetermined correlation between the temperature signal and the signal emitted by said at least an auxiliary sensor (6) in a predetermined measurement time interval.

**Patentansprüche**

1. Bremsvorrichtung (1) für ein schweres Fahrzeug, umfassend Bremsen, die jeweils mindestens einen Bremsbelag oder eine Bremsbacke (2) umfassen, der bzw. die einen Träger (3) und einen Reibblock (4) aufweist, der bzw. die auf eine Bremsscheibe oder eine Bremstrommel wirkt, die einem Rad des schweren Fahrzeugs zugeordnet ist, und einen Temperatursensor (5), der auf einer elektrisch isolierten elektrischen Schaltung (7) montiert ist, die auf dem Träger (3) integriert ist und zwischen dem Reibblock (4) und dem Träger (3) vorgesehen ist, **dadurch gekennzeichnet, dass** sie eine Sicherheitsvorrichtung zum Verhindern einer Überhitzung der Bremsen umfasst, wobei die Sicherheitsvorrichtung die Sendeeinrichtung (10) einer Alarm- und Steuereinrichtung (11, 12), die mit dem mindestens einem Sensor (5) und mit der Sendeeinrichtung (10) kommuniziert, umfasst, wobei die Steuereinrichtung (11, 12) einen Speicher (13) umfasst, der mindestens eine erste Schwellentemperatur enthält, und einen Komparator (14), der ausgebildet ist, um die Ausgabe des Alarms zu validieren, wenn eine Temperatur, die in mindestens einem Bremsbelag (2) oder mindestens einer Bremsbacke erfasst wird, höher als die erste Schwellentemperatur ist, und die Temperatur, die in mindestens einem anderen Bremsbelag (2) oder mindestens einer anderen Bremsbacke erfasst wird, niedriger als die erste Schwellentemperatur ist, wobei der Bremsbelag (2) oder die Bremsbacke mindestens einen Hilfssensor (6) umfasst, der zwischen dem Reibblock (4) und dem Träger (3) vorgesehen ist und mit der Steuereinrichtung (11, 12) kommuniziert, wobei der mindestens eine Hilfssensor (6) mindestens einen piezokeramischen Drucksensor und/oder einen piezokeramischen Schersensor umfasst, wobei der Komparator (14) ausgebildet ist, um die Ausgabe des Alarms nur bei Vorliegen einer vorbestimmten Korrelation zwischen dem Temperatursignal und dem Signal, das von dem mindestens einen Hilfssensor (6) in einem vorbestimmten Messzeitintervall abgegeben wird, zu validieren.

2. Bremsvorrichtung (1) für ein schweres Fahrzeug nach Anspruch 1, **dadurch gekennzeichnet, dass** der Komparator (14) für einen Echtzeitvergleich zwischen der in den Bremsbelägen (2) oder Bremsbacken erfassten Temperatur ausgebildet ist.

3. Bremsvorrichtung (1) für ein schweres Fahrzeug nach Anspruch 1, **dadurch gekennzeichnet, dass** der Komparator (14) ausgebildet ist, um die Ausgabe des Alarms zu validieren, wenn die in mindestens einem Bremsbelag (2) oder mindestens einer Bremsbacke erfasste Temperatur höher als die erste Schwellentemperatur ist und die in einer Mehrzahl der Bremsbeläge (2) oder Bremsbacken erfasste Temperatur niedriger als die Schwellentemperatur ist.

4. Bremsvorrichtung (1) für ein schweres Fahrzeug nach Anspruch 1, **dadurch gekennzeichnet, dass** der Speicher (13) mindestens eine zweite Schwellentemperatur enthält, die niedriger ist als die erste Schwellentemperatur, wobei die Steuereinrichtung (11, 12) derart ausgebildet ist, dass sie die Ausgabe eines Voralarms befiehlt, wenn die in mindestens einem Bremsbelag (2) oder mindestens einer Bremsbacke erfasste Temperatur zwischen der ersten und der zweiten Schwellentemperatur liegt.

5. Bremsvorrichtung (1) für ein schweres Fahrzeug nach Anspruch 1, **dadurch gekennzeichnet, dass** die Sendeeinrichtung (10) zur Ausgabe eines akustischen und/oder hörbaren Alarms ausgebildet ist.

6. Bremsvorrichtung (1) für ein schweres Fahrzeug nach Anspruch 1, **dadurch gekennzeichnet, dass** die Steuereinrichtung (11, 12) periphere elektronische Steuereinheiten (11), die jeweils an einer jeweiligen Bremse angeordnet sind, und eine zentrale elektronische Steuereinheit (12) umfasst, die mit den Peripheriesteuereinheiten (11) und mit der Sendeeinrichtung (10) kommuniziert.

7. Bremsvorrichtung (1) für ein schweres Fahrzeug nach Anspruch 1, **dadurch gekennzeichnet, dass** die Steuereinrichtung (11, 12) eine zentrale elektronische Steuereinheit umfasst, die mit dem mindestens einen Sensor (5) und mit der Sendeeinrichtung (10) kommuniziert.

8. Bremsvorrichtung (1) für ein schweres Fahrzeug nach Anspruch 1, **dadurch gekennzeichnet, dass** die Steuereinrichtung (11, 12) an einen CAN-Bus (Controller Area Network) des Fahrzeugs angeschlossen ist.

9. Bremsvorrichtung (1) für ein schweres Fahrzeug nach einem der vorhergehenden Ansprüche, **dadurch gekennzeichnet, dass** jeder Sensor (5, 6) mit einer elektrisch isolierenden Schutzschicht (9) bedeckt ist.

**10.** Bremsvorrichtung (1) für ein schweres Fahrzeug nach Anspruch 1, **dadurch gekennzeichnet, dass** die Steuereinrichtung (11, 12) eine elektrische Energieversorgung umfasst, die zum Absorbieren von Energie aus einer Bewegung des Fahrzeugs ausgebildet ist.

**11.** Verfahren zum Verhindern einer Überhitzung von Bremsen in einem schweren Fahrzeug, wobei jede Bremse mindestens einen Bremsbelag (2) oder einen Bremsbacken, der einen Träger (3) und einen Reibklotz (4) aufweist, der bzw. die auf eine Bremsscheibe oder eine Bremstrommel wirkt, die einem Rad des schweren Fahrzeugs zugeordnet ist, mindestens einen Temperatursensor (5), der zwischen dem Reibblock (4) und dem Träger (3) vorgesehen ist, und mindestens einen Hilfssensor (6) umfasst, der zwischen dem Reibblock (4) und dem Träger (3) vorgesehen ist, wobei der mindestens eine Hilfssensor (6) mindestens einen piezokeramischen Drucksensor und/oder einen piezokeramischen Schersensor umfasst, **gekennzeichnet durch**:

- das Erfassen einer in den Bremsbelägen (2) oder Bremsbacken erfassten Temperatur in Echtzeit;
- das Vergleichen der in den Bremsbelägen (2) oder Bremsbacken erfassten Temperatur in Echtzeit;
- das Validieren der Ausgabe des Alarms, wenn die in mindestens einem Bremsbelag (2) oder mindestens einer Bremsbacke erfasste Temperatur höher als die Schwellentemperatur ist und die in mindestens einem anderen Bremsbelag oder mindestens einer anderen Bremsbacke erfasste Temperatur niedriger als die Schwellentemperatur ist; und
- im Falle der Validierung, das Erzeugen eines akustischen und/oder visuellen Alarms,

wobei die Ausgabe des Alarms nur bei Vorliegen einer vorbestimmten Korrelation zwischen dem Temperatursignal und dem Signal, das von dem mindestens einen Hilfssensor (6) in einem vorbestimmten Messzeitintervall ausgegeben wird, validiert wird.

**Revendications**

**1.** Dispositif de freinage (1) pour un véhicule lourd. comprenant des freins comprenant chacun au moins une plaquette de frein ou un patin de frein (2) présentant un support (3) et un bloc de friction (4) agissant sur un disque de frein ou un tambour de frein associé à une roue du véhicule lourd, et un capteur de température (5) monté sur un circuit électrique isolé électriquement (7) intégré sur le support (3) et fourni entre ledit bloc de friction (4) et ledit support (3), **caractérisé en ce qu'**il comprend un dispositif de sécurité pour l'empêchement de la surchauffe des freins, ledit dispositif de sécurité comprenant des moyens d'émission (10) d'une alarme et des moyens de commande (11, 12) communiquant avec ledit au moins un capteur (5) et avec lesdits moyens d'émission (10), lesdits moyens de commande (11, 12) comprenant une mémoire (13) contenant au moins une première température seuil, et un comparateur (14) configuré pour valider l'émission de ladite alarme si une température détectée dans au moins une plaquette de frein (2) ou un patin de frein est supérieure à ladite première température seuil et si la température détectée dans au moins une autre plaquette de frein (2) ou un autre patin de frein est inférieure à ladite première température seuil, ladite plaquette de frein (2) ou ledit patin de frein comprend au moins un capteur auxiliaire (6) fourni entre ledit bloc de friction (4) et ledit support (3) et communiquant avec lesdits moyens de commande (11, 12), dudit au moins un capteur auxiliaire (6) comprenant au moins un capteur de pression piézocéramique et/ou un capteur de cisaillement piézocéramique, ledit comparateur (14) est configuré pour valider l'émission de ladite alarme uniquement en présence d'une corrélation prédéterminée entre le signal de température et le signal émis par ledit au moins un capteur auxiliaire (6) dans un intervalle de temps de mesure prédéterminé.

**2.** Dispositif de freinage (1) pour un véhicule lourd selon la revendication 1, **caractérisé en ce que** ledit comparateur (14) est configuré pour une comparaison en temps réel entre la température détectée dans les plaquettes de frein (2) ou les patins de frein.

**3.** Dispositif de freinage (1) pour un véhicule lourd selon la revendication 1, **caractérisé en ce que** ledit comparateur (14) est configuré pour valider l'émission de ladite alarme si la température détectée dans au moins une plaquette de frein (2) ou un patin de frein est supérieure à ladite première température seuil et si la température détectée dans une majorité des plaquettes de frein (2) ou des patins de frein est inférieure à ladite température seuil.

**4.** Dispositif de freinage (1) pour un véhicule lourd selon la revendication 1, **caractérisé en ce que** ladite mémoire (13) contient au moins une deuxième température seuil qui est inférieure à ladite première température seuil, lesdits moyens de commande (11, 12) étant configurés afin de commander l'émission d'une pré-alarme si la température détectée dans au moins une plaquette de frein (2) ou un patin de frein est comprise entre ladite première et ladite deuxième température seuil.

**5.** Dispositif de freinage (1) pour un véhicule lourd selon la revendication 1, **caractérisé en ce que** lesdits moyens d'émission (10) sont configurés pour l'émission d'une alarme acoustique et/ou sonore.

6. Dispositif de freinage (1) pour un véhicule lourd selon la revendication 1, **caractérisé en ce que** lesdits moyens de commande (11, 12) comprennent des unités de commande électroniques périphériques (11), chacune étant située sur un frein relatif, et une unité de commande électronique centrale (12) communiquant avec lesdites unités de commande périphériques (11) et avec lesdits moyens émetteurs (10).

7. Dispositif de freinage (1) pour un véhicule lourd selon la revendication 1, **caractérisé en ce que** lesdits moyens de commande (11, 12) comprennent une unité de commande électronique centrale communiquant avec ledit au moins un capteur (5) et avec lesdits moyens d'émission (10).

8. Dispositif de freinage (1) pour un véhicule lourd selon la revendication 1, **caractérisé en ce que** lesdits moyens de commande (11, 12) sont connectés à un bus CAN (réseau de zone de commande) du véhicule.

9. Dispositif de freinage (1) pour un véhicule lourd selon l'une quelconque des revendications précédentes, **caractérisé en ce que** chaque capteur (5, 6) est recouvert d'une couche de protection électriquement isolante (9).

10. Dispositif de freinage (1) pour un véhicule lourd selon la revendication 1, **caractérisé en ce que** lesdits moyens de commande (11, 12) comprennent un fournisseur d'énergie électrique configuré pour l'absorption d'énergie provenant d'un mouvement du véhicule.

11. Procédé pour l'empêchement de la surchauffe de freins dans un véhicule lourd, dans lequel chaque frein comprend au moins une plaquette de frein (2) ou un patin de frein présentant un support (3) et un bloc de friction (4) agissant sur un disque de frein ou un tambour de frein associé à une roue du véhicule lourd, au moins un capteur de température (5) fourni entre ledit bloc de friction (4) et ledit support (3), et au moins un capteur auxiliaire (6) fourni entre ledit bloc de friction (4) et ledit support (3), dudit au moins un capteur auxiliaire (6) comprenant au moins un capteur de pression piézocéramique et/ou un capteur de cisaillement piézocéramique, **caractérisé par** le fait de :

- l'acquisition en temps réel d'une température détectée dans les plaquettes de frein (2) ou les patins de frein ;

- la comparaison en temps réel de la température détectée dans les plaquettes de frein (2) ou les patins de frein ;

- la validation de l'émission de ladite alarme si la température détectée dans au moins une plaquette de frein (2) ou un patin de frein est supérieure à ladite température seuil et si la température détectée dans au moins une autre plaquette de frein ou un autre patin de frein est inférieure à ladite température seuil ; et
- en cas de validation, la génération d'une alarme acoustique et/ou visuelle,

dans lequel l'émission de ladite alarme est validée uniquement en présence d'une corrélation prédéterminée entre le signal de température et le signal émis par ledit au moins un capteur auxiliaire (6) dans un intervalle de temps de mesure prédéterminé.

Fig. 1

Fig. 2

**EP 3 350 466 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014170726 A1

- US 2004015283 A1